# FASCICULE DE BREVET EUROPEEN

(11) **EP 3 914 565 B1**
(45) Date de publication et mention de la délivrance du brevet: **08.03.2023**
(21) Numéro de dépôt: 20707162.2
(22) Date de dépôt: 24.01.2020
(51) Int. Cl.: C04B 28/00, C04B 33/13, C04B 33/04, C04B 111/28

(54) **COMPOSITION POUR LA FORMATION D'UN GÉOPOLYMÈRE À PROPRIÉTÉS IGNIFUGES ET MÉCANIQUES AMÉLIORÉES, PROCÉDÉ DE FABRICATION DE CE GÉOPOLYMÈRE ET SES UTILISATIONS**
ZUSAMMENSETZUNG ZUR HERSTELLUNG EINES GEOPOLYMERS MIT VERBESSERTEN FEUERFESTEN UND MECHANISCHEN EIGENSCHAFTEN, VERFAHREN ZUR HERSTELLUNG DIESES GEOPOLYMERS UND VERWENDUNGEN DAVON
COMPOSITION FOR FORMING A GEOPOLYMER WITH IMPROVED FIREPROOF AND MECHANICAL PROPERTIES, METHOD FOR MANUFACTURING THIS GEOPOLYMER AND THE USES THEREOF

(30) Priorité: 25.01.2019 FR 1900700
(43) Date de publication de la demande: 01.12.2021
(73) Titulaire: Agence Nationale Pour La Gestion Des Dechets Radioactifs, 92298 Chatenay-malabry Cedex (FR); Université de Limoges, 87032 Limoges Cedex (FR); Centre national de la recherche scientifique, 75016 Paris (FR)
(72) Inventeur: ROSSIGNOL, Sylvie, 87570 Rilhac Rancon (FR); GHARZOUNI, Ameni, 87100 Limoges (FR); TEXIER MANDOKI, Nathalie, 91120 Palaiseau (FR); BOURBON, Xavier, 92160 Antony (FR)
(74) Mandataire: Cabinet Chaillot
(86) Numéro de dépôt international: PCT/IB2020/050561
(87) Numéro de publication internationale: WO 2020/152638

(56) Documents cités:
- C Dupuy ET AL: "Alkali-Activated Materials Based on Callovo-Oxfordian Argillite: Formation, Structure and Mechanical Properties", J. Ceram. Sci. Technol, 1 juin 2018 (2018-06-01), pages 127-140, XP055625533, DOI: 10.4416/JCST2017-00086 Extrait de l'Internet: URL:https://www.ceramic-science.com/articl es/all-articles.html?article_id=100648&doi =10.4416/JCST2017-00086 [extrait le 2019-09-24]
- GHARZOUNI A ET AL: "The effect of furnace and flash heating on COx argillite for the synthesis of alkali-activated binders", JOURNAL OF CLEANER PRODUCTION, ELSEVIER, AMSTERDAM, NL, vol. 156, 10 avril 2017 (2017-04-10), pages 670-678, XP085020063, ISSN: 0959-6526, DOI: 10.1016/J.JCLEPRO.2017.04.056
- GHARZOUNI A ET AL: "Alkali-activated materials from different aluminosilicate sources: Effect of aluminum and calcium availability", JOURNAL OF NON-CRYSTALLINE SOLIDS, NORTH-HOLLAND PHYSICS PUBLISHING. AMSTERDAM, NL, vol. 484, 16 janvier 2018 (2018-01-16), pages 14-25, XP085349982, ISSN: 0022-3093, DOI: 10.1016/J.JNONCRYSOL.2018.01.014
- M Monsif ET AL: "The implementation of geopolymers materials from Moroccan clay, within the framework of the valorization of the local natural resources", Journal of Materials and Environmental Science, 1 janvier 2017 (2017-01-01), pages 2704-2721, XP055625218, Extrait de l'Internet: URL:http://jmaterenvironsci.com/Document/v ol8/vol8_N8/290-JMES-Monsif.pdf

## Description

La présente invention concerne des géopolymères à propriétés ignifuges et mécaniques renforcées, leur fabrication et leurs applications.

Par « géopolymères », on entend des composés aluminosilicates préparés à température ambiante. Les matériaux géopolymères sont des gels d'aluminosilicates amorphes résultant de l'activation alcaline d'une source aluminosilicate à basse température (< inférieure à 100°C). La formule générale de ces matériaux est M⁺ₙ{(SiO₂)_{z}, Al₂O₃]ₙ, wH₂O) avec n, le degré de polymérisation, z le rapport molaire Si/Al et M+ un cation monovalent. Les réactions de polycondensation et de géopolymérisation sont responsables de la formation d'un réseau tridimensionnel de tétraèdres SiO₄ et AlO₄ conduisant à la consolidation du matériau.

Les géopolymères sont généralement préparés à partir d'une source aluminosilicate réactive constituée idéalement de kaolins traités ou d'argilites activées, puis activée en milieux aqueux alcalins (soude ou potasse et silicate alcalin). On obtient alors des matrices solides par réactions de polycondensation de silicates alcalins.

Les géopolymères possèdent des propriétés qui leurs confèrent un bon comportement face aux sollicitations thermiques, au point d'être parfois employés comme matériaux de protection contre les incendies.

GHARZOUNI A ET AL: "The effect of furnace and flash heating on COx argillite for the synthesis of alkali-activated binders", JOURNAL OF CLEANER PRODUCTION, vol. 156, 10 avril 2017, pages 670-678, propose un aluminosilicate pour la formation d'un géopolymère comportant un argilite non calciné et un métakaolin.

M Monsif ET AL: "The implementation of geopolymers materials from Moroccan clay, within the framework of the valorization of the local natural resources", Journal of Materials and Environmental Science, 1 janvier 2017, pages 2704-2721, divulgue une composition pour la formation d'un géopolymère comportant un aluminosilicate, qui est formé par un mélange d'un kaolin avec un matériau argileux.

Les domaines d'application des géopolymères sont majoritairement :
le développement de nouveaux liants minéraux avec une demande énergétique moins importante que les liants cimentaires ;
l'inertage de déchets industriels, par exemple pour formuler des matrices de confinement de déchets radioactifs métalliques réactifs ;
la valorisation de coproduits ou sous-produits industriels ;
le développement de barrière de protection thermique.

Les besoins en géopolymères et l'étendue de leurs applications sont tels qu'il convient d'en proposer de nouveaux. Il est ainsi possible de développer des géopolymères présentant des propriétés ignifuges et mécaniques renforcées.

A cet effet, l'invention porte sur une composition pour la formation d'un géopolymère caractérisée par le fait qu'elle comporte :
(A) un mélange pulvérulent alumino-silicaté formé de :
   (A1) 10 à 75 parties en poids d'au moins un matériau argileux présentant, en composition massique (en % massique) :
      - 30 à 70 % de SiO₂ ;
      - 10 à 40 % d'Al₂O₃ ;
      - 5 à 20 % de CaO;
      - 0,5 à 6 % de MgO, et
   (A2) 90 à 25 parties en poids d'au moins un kaolin,
   (A1) + (A2) représentant 100 parties en poids,
   et les constituants (A1) et (A2) ayant été mélangés puis calcinés pour former ledit mélange pulvérulent alumino-silicaté (A) ; et
(B) une solution aqueuse alcaline d'au moins un silicate de métal alcalin ;
   les constituants (A) et(B) étant destinés à être mélangés pour former une solution colloïdale réactive apte à fournir ledit géopolymère par durcissement.

Pour le durcissement du géopolymère, on peut parler de prise du géopolymère. Cette prise de propriétés physiques résulte de réactions de polycondensation et de géopolymérisation.

Cette polycondensation correspond à une réaction de réticulation, en milieu alcalin, d'un squelette silicaté constituant la matrice solide du géopolymère.

Les constituants (A1) et (A2) peuvent en outre contenir des carbonates alcalino-terreux, des oxydes métalliques ou de la silice cristallisée sous forme de quartz, dont la réactivité peut s'exprimer (i) lors de la prise du géopolymère ; (ii) lors d'un « traitement thermique » ultérieur, volontaire ou non, en provoquant en particulier la formation de silicates de calcium, de zéolithe ou d'aluminates (type structures spinelles) agissant comme renforts mécaniques dans le matériau après transitoire thermique.

Le ou les matériaux argileux du constituant (A1) peuvent être choisis parmi ceux présentant une composition massique en SiO₂, Al₂O₃, MgO et CaO (% massique) notamment dans les plages telles que définies ci-dessous :
- 55 à 65 % de SiO₂ ;
- 15 à 29 % d'Al₂O₃ ;
- 7 à 13 % de CaO;
- 1 à 3% de MgO.

Le ou les matériaux argileux du constituant (A1) peuvent être issus des argilites du Callovo-Oxfordien ayant la composition minéralogique suivante :

| | | % massique |
|---|---|---|
| Minéraux argileux | | 20-55 |
| (dont kaolin) | | (3-5) |
| Carbonates | Calcite (CaCO₃) Dolomite (CaMg(CO₃)₂) ; et Ankérite Ca(Fe,Mg)(CO₃)₂ | 20-40 |
| | | 1,5-6,5 |
| Silicates et Testosilicates | Quartz (SiO₂) | 15-28 |
| | Feldspath potassique | 1-2 |
| | Plagioclase | 0,5-1,5 |
| Minéraux annexes | (dont pyrites) | 1,5-3,0 |

ou la composition massique suivante, en % massique :
   - SiO₂ : 50-60 ;
   - Al₂O₃ : 10-20 ;
   - Na₂O : 0-1 ;
   - K₂O : 3-4 ;
   - CaO : 5-20 ;
   - MgO : 2-6 ;
   - Fe₂O₃ : 4-6 ;
   - S : 1-3, et
ayant un rapport molaire Si/Al compris entre 2,5 et 3,5.

Le constituant (A2) peut être un kaolin soit purifié (dénommé ci-dessous Kₚᵤᵣ), soit contenant des minéraux accessoires comme du quartz et des carbonates alcalino-terreux (dénommé ci-dessous K_{carb}), choisi parmi ceux ayant les compositions massiques suivantes :

| Dénomination | SiO₂ (% massique) | Al₂O₃ (% massique) | Rapport molaire Si/Al |
|---|---|---|---|
| Kₚᵤᵣ | 54±5 | 46±5 | 1 |
| K_{carb} | 60±3 | 35±3 | 1,44 |

ou la composition minéralogique suivante, en % massique :

| Dénomination | Kₚᵤᵣ | K_{carb} |
|---|---|---|
| Kaolin | 90 | 54, 9 |
| Quartz | 0 | 41, 7 |
| Carbonates | 0 | 1,2 |
| Hématite | 0 | 0,7 |
| Minéraux annexes | 2 | 1,5 |

Le constituant (A1) peut représenter 50 à 70 parties en poids du mélange (A), et le constituant (A2), 50 à 30 parties en poids.

Le mélange (A) peut être calciné à une température comprise entre 550 et 800°C, bornes incluses, et préférentiellement entre 600 et 750°C, bornes incluses.

Le ou les silicates de métaux alcalins peuvent être choisis parmi un silicate de potassium et un silicate de sodium.

Le rapport molaire silicium/métal alcalin ou métaux alcalins du ou des silicates du constituant (B) peut être compris entre 0,4 et 1,7, bornes incluses, et préférentiellement entre 0,5 et 0,9, bornes incluses.

La solution aqueuse formant le constituant (B) peut avoir une teneur en eau de 80 à 40 % en poids, notamment de 70 à 50 % en poids.

L'invention porte également sur un procédé de fabrication d'un géopolymère à partir d'une composition telle que définie ci-dessus, caractérisé par le fait qu'il comporte les étapes suivantes :
a. on mélange les constituants (A1) et (A2), lesdits constituants étant broyés séparément puis mélangés ou étant co-broyés ;
b. on calcine ledit mélange pour obtenir le mélange calciné (A) ;
c. on prépare une solution aqueuse (B), dite solution d'activation, par dissolution de pastilles d'hydroxyde d'au moins un métal alcalin dans une solution aqueuse de silicate d'au moins un métal alcalin, pour obtenir un rapport molaire silicium/métal alcalin ou métaux alcalins de 0,4 à 1,7, bornes incluses, et préférentiellement de 0,5 à 0,9, bornes incluses ;
d. on mélange le mélange calciné (A) issu de l'étape (b) et la solution d'activation (B) issue de l'étape (c) pour obtenir une solution colloïdale réactive ;
e. on met en forme la solution colloïdale réactive issue de l'étape (d) ;
f. on laisse durcir la solution colloïdale réactive mise en forme à l'étape (e) pour obtenir le géopolymère ; et
g. le cas échéant, on fait subir au géopolymère un traitement thermique à une température comprise entre 800 et 1 200°C, dans une atmosphère sèche ou humide pour l'obtention d'un géopolymère céramisé.

A l'étape (a), le mélange (A1) + (A2) peut être homogénéisé pendant 4 à 12 heures.

A l'étape (b), le mélange peut être calciné à une température comprise entre 550 et 800°C, notamment de 600 à 750°C, soit dans un four cellule pendant une durée de 3 à 5 heures, soit dans un four rotatif pendant une durée de 0,5 à 1 heure, soit dans un four flash pendant une durée de 1 à 15 secondes.

A l'étape (e), on peut mettre en forme la solution colloïdale réactive par moulage, par coulage, par injection ou par extrusion pour la réalisation de pièces massives, ou par projection pour la réalisation de placages, ladite solution colloïdale réactive durcissant en l'espace de 1 à 360 minutes après sa mise en forme et formant le géopolymère sous la forme de :
- pièces massives de géométries variables, telles que blocs ou pièces pouvant s'assembler, coulis injectés *in situ* dans des ouvrages ;
- couches en revêtement d'une surface d'un autre matériau tel que des bétons, des briques ; ou
- par mélange avec un autre matériau, auquel cas il joue le rôle d'un liant en faisant suivre par son durcissement en mélange avec cet autre matériau.

Après l'étape (e), on peut maintenir la solution colloïdale réactive dans cet état pendant 0,5 à 2 jours avant de la laisser subir son durcissement, par ajout d'additifs minéraux « retardateurs de prise » choisis parmi ceux à base de bore ou de phosphore, tels que l'acide borique, le borax ou l'acide phosphorique, à raison notamment de 2 à 3 % en masse par rapport à la solution colloïdale.

Pour l'obtention d'un géopolymère céramisé, on peut mettre en oeuvre l'étape (g) consistant à porter le géopolymère obtenu à l'étape (f), à une température comprise entre 800 et 1 200°C en atmosphère sèche ou humide pendant une durée de 15 à 120 minutes.

Cette étape permet de générer des phases cristallines permettant la création de renforts mécaniques dans le matériau. Ce traitement thermique permet ainsi une augmentation des résistances mécaniques du fait de la néoformation de ces renforts cristallins.

Le géopolymère céramisé obtenu soit par traitement thermique, soit suite à une élévation de température importante, par exemple lors d'un incendie, présente par ailleurs une résistance à la lixiviation accrue.

L'invention porte également sur l'utilisation d'un géopolymère obtenu par le procédé tel que défini ci-dessus :
- comme liant minéral, ledit géopolymère se présentant sous la forme d'un matériau consolidé ;
- pour l'inertage de déchets industriels, ledit géopolymère ayant été amené à durcir en mélange avec lesdits déchets industriels ;
- pour former une barrière de protection thermique, ledit géopolymère ayant été obtenu par projection pour former une couche sur une surface à protéger ;
- comme élément réfractaire, ledit géopolymère ayant été obtenu par moulage ou projection.

L'invention porte également sur l'utilisation d'un géopolymère céramisé obtenu par le procédé tel que défini ci-dessus :
- pour former une barrière de protection thermique ;
- comme élément réfractaire.

Les Exemples suivants illustrent la présente invention sans toutefois en limiter la portée.

### Mode opératoire général

### 1. Préparation d'un mélange alumino-silicaté (A)

On mélange les deux poudres composant le mélange alumino-silicaté à l'aide d'un agitateur à rouleau pendant une durée t₁. On calcine ensuite le mélange à une température de 600 ou 750°C avec un four choisi parmi les fours cellules, rotatifs et flash. Les durées de calcination sont de t_{cellule}, t_{rotatif} et t_{flash} pour une calcination dans un four respectivement cellule, rotatif et flash.

### 2. Préparation d'une solution d'activation (B)

On prépare une solution d'activation par dissolution de pastilles d'hydroxyde de potassium dans une solution commerciale de silicate de potassium afin de fixer le rapport molaire Si/K à la valeur r et le taux d'eau à tₑₐᵤ.

### 3. Préparation d'une solution colloïdale réactive de (A) + (B), laquelle est amenée à durcir par coulage en moule

On ajoute une quantité Q du mélange (A) à la solution d'activation (B). On malaxe la solution colloïdale pendant une durée t₂ et on la coule à la température ambiante dans un moule fermé dans lequel elle est maintenue pendant un temps de cure endogène jusqu'à 7 jours.

### 4. Test des géopolymères obtenus

### 4.1 Résistance au feu

La résistance des géopolymères en température est testée dans un four cellule à une vitesse de rampe de 5°C/min jusqu'à 1000°C, suivie d'une isotherme de 15 min. Le refroidissement est mené de manière naturelle.

### 4,2 Résistance à la compression

Des tests de résistance en compression simple ont été réalisés sur des éprouvettes cylindriques à l'aide d'une presse Instron 5969 avec un capteur de force de 50 kN. Les éprouvettes sont préalablement rectifiées à l'aide d'une meule diamantée afin d'obtenir un élancement (hauteur/diamètre) au minimum égal à 2 (ASTM D1633 - 00. Standard Test Methods for Compressive Strength of Molded Soil Cement Cylinders. 2007) (ø 15 X 30 mm) et des faces parfaitement parallèles et planes. Les éprouvettes sont soumises à une charge croissante jusqu'à la rupture à la vitesse de 0,5 mm.min⁻¹. Les essais ont été réalisés sur des échantillons avant et après traitement thermique à 1000°C.

### Exemples

Dans ces exemples, on a utilisé comme constituant A1, l'argilite crue notée par la suite « A25 » ; et comme constituant A2, les kaolins notés K1 et K5, correspondant respectivement à Kₚᵤᵣ et K_{carb}.

Les compositions massiques de A25, K1 et K5 avec leur rapport molaire Si/Al sont données dans le Tableau 1 ci-après.

**[Tableaux1]**

| | Composition massique (% massique) | | | | | | | | Rapport molaire Si/Al |
|---|---|---|---|---|---|---|---|---|---|
| | SiO₂ | Al₂O₃ | Na₂O | K₂O | CaO | MgO | Fe₂O₃ | S | |
| A25 | 57,07 | 15,72 | 0,23 | 3,82 | 12,58 | 2,93 | 5,29 | 1 | 3,09 |
| K1 | 54 | 46 | - | - | - | - | - | - | 1 |
| K5 | 59,9 | 35,3 | - | - | 0,5 | - | - | - | 1,44 |

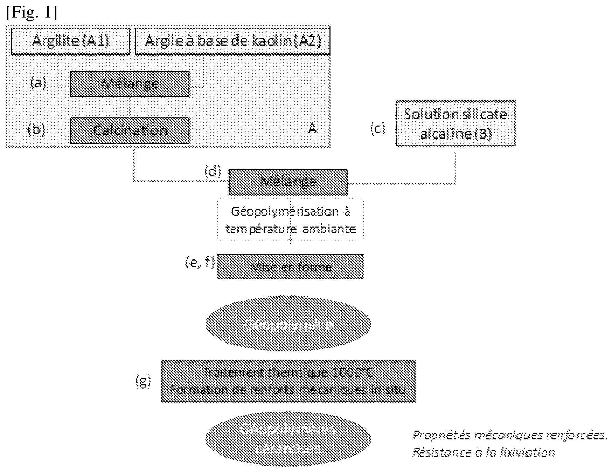

[Fig.1] est un diagramme montrant les étapes à suivre pour la formation d'un géopolymère ou d'un géopolymère céramisé après traitement thermique.

### Exemple 1

On prépare 24 g de mélange alumino-silicaté à partir de 8 g de kaolin K5 et 16 g d'argilite A25, mélangés pendant t₁= 4 heures.

Le mélange alumino-silicaté est calciné à la température de 600°C pendant une durée de 4 heures dans un four cellule.

A 15,6 g d'une solution commerciale de silicate de potassium de rapport molaire Si/ K de 1,7, on ajoute 3,16 g de pastilles d'hydroxyde de potassium afin d'obtenir un rapport molaire r de 0,58 et un taux d'eau tₑₐᵤ de 76 % en poids.

On ajoute le mélange (A) à la solution de silicate de potassium (B) préparée ci-dessus. On malaxe cette solution colloïdale pendant 5 minutes puis on la coule dans un moule fermé à la température ambiante et on l'y maintient pendant un temps de cure endogène de 7 jours.

### Exemple 2

On procède comme à l'Exemple 1, à l'exception que le mélange (A) est calciné à la température de 750°C pendant une durée de 4 heures dans un four cellule.

### Exemple 3

On procède comme à l'Exemple 1, à l'exception que l'on prépare 28,2 g de mélange (A) à partir de 18,8 g de kaolin K5 et de 9,4 g d'argilite A25.

### Exemple 4

On procède comme à l'Exemple 2, à l'exception que l'on prépare 24 g de mélange (A) à partir de 12 g d'argilite A25 et de 12 g de kaolin K5.

### Exemple comparatif 1

On procède comme à l'Exemple 1, à l'exception que l'on prépare le mélange (A) avec 24 g de kaolin K5.

### Exemple comparatif 2

On procède comme à l'Exemple comparatif 1, à l'exception que le mélange (A) est calciné à la température de 750°C pendant une durée de 4 heures dans un four cellule.

### Résistance à la compression après traitement thermique

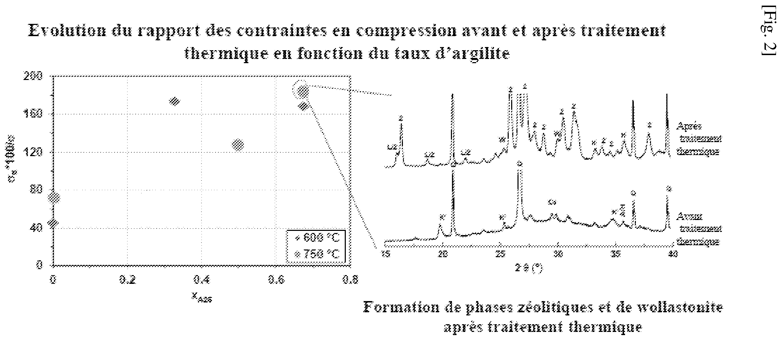

[Fig.2] représente en partie gauche un graphique montrant le rapport de la résistance à la compression pour des géopolymères obtenus à partir d'une composition dont le mélange (A) contient 0, 33, 50 ou 67 % en masse d'argilite A25 et le reste de kaolin K5 et qui a été calciné à une température de 600 ou 750°C, avant (σ) et après (ott) traitement thermique à 1000°C des géopolymères obtenus, un tel traitement thermique étant destiné à évaluer leur tenue mécanique au feu. [Fig. 2] représente en partie droite, les diagrammes de diffraction des rayons X obtenus pour le géopolymère obtenu à l'aide d'un mélange (A) contenant 67 % en masse d'argilite A25 et le reste de kaolin K5 et calciné à 750°C, le diagramme du haut correspondant à celui du géopolymère ayant un subi un traitement thermique à 1000°C et le diagramme du bas correspondant à celui du géopolymère qui n'a pas subi de traitement thermique. Ces diagrammes de diffraction des rayons X ont été obtenus à l'aide d'un appareil Brucker-AXS D8 de type Debye-Scherrer avec la radiation Cu Kα (λKα = 1,54056 Å).

Le graphique en partie gauche de [Fig.2] indique l'effet de la température de calcination des mélanges (K51-xA25x) sur la résistance en compression avant (σ) et après traitement thermique (σtt) pour les deux températures de calcination. Quelle que soit la température de calcination, la présence de l'argilite dans le mélange induit un gain de résistance après traitement thermique. En revanche, deux comportements distincts sont observés selon la température de calcination.

En effet, dans le cas d'une calcination du mélange (A)à 600°C, à 33% et 67% en masse de A25, la valeur de la résistance est multipliée par 1,7 à 1,8 après traitement thermique suggérant un effet de A25 constant sur tout le domaine de variation de composition couvert. Dans le cas d'une calcination du mélange (A) à 750°C, l'effet de A25 semble être progressif, avec une résistance mécanique multipliée, après traitement thermique, par 1,25 à 50% en masse de A25 et jusqu'à 1,8 à 67% en masse de A25 dans le mélange (A).

La partie droite de [Fig.2] présente les phases minéralogiques cristallisées identifiées après le test à la température de 1000°C. La caractérisation par diffraction des rayons X permet d'établir une description des différents phénomènes et réactions chimiques intervenant lors du traitement thermique. L'utilisation de la solution de silicate de potassium conduit principalement à la cristallisation de phase zéolitique (notée z) et de wollastonite (notée w). En présence d'autre cation alcalin, il peut y avoir la formation d'autres phases alumino-silicatées (alcalines et alcalines/alcalino-terreuses) comme la combeite, la néphéline, la leucite et du KAlSiO4.

Le changement de traitement thermique du mélange initial permet la formation d'une plus grande quantité de wollastonite, et donc l'obtention d'une meilleure résistance mécanique après le traitement thermique. Cela peut s'expliquer, lors de la formation de la wollastonite, par une réactivité différente de la calcite (présente dans l'argilite) et de l'oxyde de calcium (formé lors du traitement thermique de l'argilite).

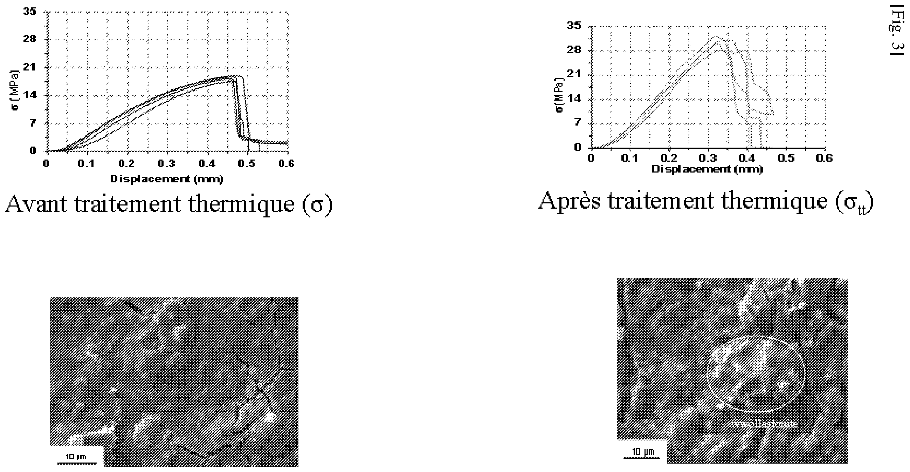

[Fig.3] représente en partie gauche, en haut les courbes de résistance en compression pour un géopolymère obtenu à l'aide d'un mélange (A) contenant 50% en masse de A1 et de 50% en masse de A2 et calciné à 600°C, et n'ayant pas subi de traitement thermique, et en bas une image de microscopie électronique à balayage avant traitement thermique du géopolymère. [Fig. 3] représente en partie droite, en haut les courbes de résistance en compression du même géopolymère ayant subi un traitement thermique à 1000°C avec la présence d'aiguilles de wollastonite visibles sur l'image de microscopie électronique à balayage.

La formation de la wollastonite est le paramètre responsable de l'amélioration des propriétés mécaniques des échantillons au cours du traitement thermique à température élevée. En effet, la wollastonite est un silicate de calcium présentant une morphologie fibreuse, qui est souvent utilisée comme renfort au sein de liants organiques.

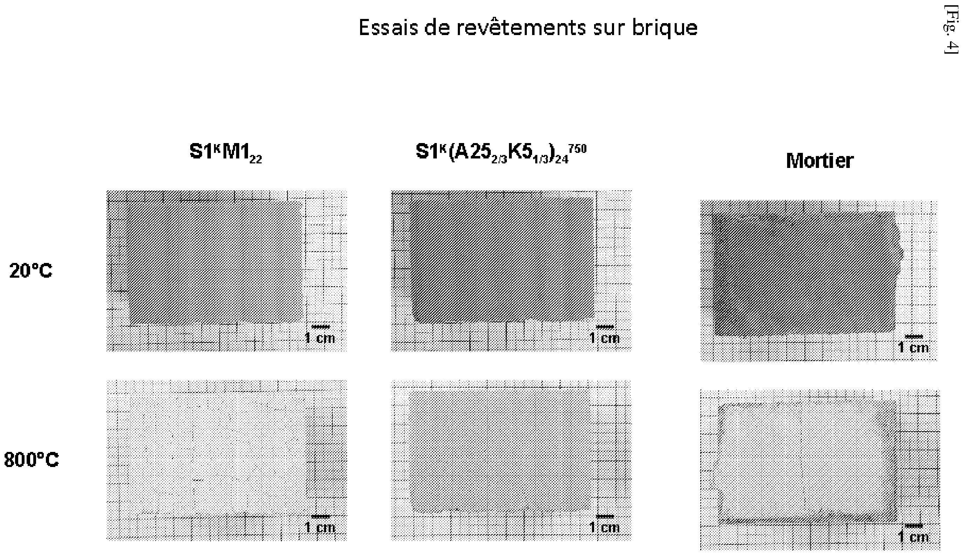

[Fig.4] représente des photographies montrant de gauche à droite l'aspect visuel de différents revêtements sur des briques, avant et après traitement thermique à 800°C, les photographies sur la ligne du bas étant celles prises après le traitement thermique, les revêtements étant constitués, de gauche à droite :
- d'un géopolymère formé à partir d'un métakaolin impur M1₂₂ et activé par une solution d'activation notée S1K ;
- d'un géopolymère selon l'invention dont le mélange (A) est constitué de 67 % en masse de A25 et de 33 % en masse du kaolin 5 et a été calciné à 750°C ;
- d'un liant cimentaire commercial CEM I avec un rapport E/C entre 0,4 et 0,6.

On peut constater que le revêtement formé du géopolymère selon l'invention présente un meilleur aspect visuel que les autres revêtements, présentant moins de fissures que les autres revêtements. Le géopolymère selon l'invention présente donc bien une meilleure tenue en température.

## Revendications

1. Composition pour la formation d'un géopolymère **caractérisée par le fait qu'**elle comporte :
(A) un mélange pulvérulent alumino-silicaté formé de :
(A1) 10 à 75 parties en poids d'au moins un matériau argileux présentant, en composition massique (en % massique) :
• 30 à 70 % de SiO₂ ;
• 10 à 40 % d'Al₂O₃ ;
• 5 à 20 % de CaO ;
• 0,5 à 6 % de MgO, et
(A2) 90 à 25 parties en poids d'au moins un kaolin,
(A1) + (A2) représentant 100 parties en poids,
et les constituants (A1) et (A2) ayant été mélangés puis calcinés pour former ledit mélange pulvérulent alumino-silicaté (A) ; et
(B) une solution aqueuse alcaline d'au moins un silicate de métal alcalin ;
les constituants (A) et(B) étant destinés à être mélangés pour former une solution colloïdale réactive apte à fournir ledit géopolymère par durcissement.

2. Composition selon la revendication 1, **caractérisée par le fait que** le ou les matériaux argileux du constituant (A1) sont choisis parmi ceux présentant en composition massique (en % massique) :
• 55 à 65 % de SiO₂ ;
• 15 à 29 % d'Al₂O₃ ;
• 7 à 13 % de CaO ;
• 1 à 3 % de MgO.

3. Composition selon la revendication 1, **caractérisée par le fait que** le ou les matériaux argileux du constituant (A1) sont issus des argilites du Callovo-Oxfordien ayant la composition minéralogique suivante :
| | | % massique |
|---|---|---|
| Minéraux argileux | | 20-55 |
| (dont kaolin) | | (3-5) |
| Carbonates | Calcite (CaCO₃) Dolomite (CaMg(CO₃)₂) ; et Ankérite Ca (Fe, Mg) (CO₃) ₂ | 20-40 |
| | | 1,5-6,5 |
| Silicates et Testosilicates | Quartz (SiO₂) | 15-28 |
| | Feldspath potassique | 1-2 |
| | Plagioclase | 0,5-1,5 |
| Minéraux annexes | (dont pyrites) | 1,5-3,0 |
ou la composition massique suivante, en % massique :
• SiO₂ : 50-60 ;
• Al₂O₃ : 10-20 ;
• Na₂O : 0-1 ;
• K₂O : 3-4 ;
• CaO : 5-20 ;
• MgO : 2-6 ;
• Fe₂O₃ : 4-6 ;
• S : 1-3, et
ayant un rapport molaire Si/Al compris entre 2,5 et 3,5.

4. Composition selon l'une des revendications 1 à 3, **caractérisée par le fait que** le constituant (A2) est un kaolin soit purifié (dénommé ci-dessous Kₚᵤᵣ), soit contenant des minéraux accessoires comme du quartz et des carbonates alcalino-terreux (dénommé ci-dessous K_{carb}), choisi parmi ceux ayant les compositions massiques suivantes :
| Dénomination | SiO₂ (% massique) | Al₂O₃ (% massique) | Rapport molaire Si/Al |
|---|---|---|---|
| Kₚᵤᵣ | 54±5 | 46±5 | 1 |
| K_{carb} | 50±3 | 35±3 | 1,44 |
ou la composition minéralogique suivante, en % massique :
| Dénomination | Kₚᵤᵣ | K_{carb} |
|---|---|---|
| Kaolin | 98 | 54,9 |
| Quartz | 0 | 41,7 |
| Carbonates | 0 | 1,2 |
| Hématite | 0 | 0,7 |
| Minéraux annexes | 2 | 1,5 |

5. Composition selon l'une des revendications 1 à 4, **caractérisée par le fait que** le constituant (A1) représente 50 à 70 parties en poids du mélange (A), et le constituant (A2), 50 à 30 parties en poids.

6. Composition selon l'une des revendications 1 à 5, **caractérisée par le fait que** le mélange (A) a été calciné à une température comprise entre 550 et 800°C, bornes incluses, et préférentiellement entre 600 et 750°C, bornes incluses.

7. Composition selon l'une des revendications 1 à 6, **caractérisée par le fait que** le ou les silicates de métaux alcalins sont choisis parmi un silicate de potassium et un silicate de sodium.

8. Composition selon l'une des revendications 1 à 7, **caractérisée par le fait que** le rapport molaire silicium/métal alcalin ou métaux alcalins du ou des silicates du constituant (B) est compris entre 0,4 et 1,7, bornes incluses, et préférentiellement entre 0,5 et 0,9, bornes incluses.

9. Composition selon l'une des revendications 1 à 8, **caractérisée par le fait que** la solution aqueuse formant le constituant (B) a une teneur en eau de 80 à 40 % en poids, notamment de 70 à 50 % en poids.

10. Procédé de fabrication d'un géopolymère à partir d'une composition telle que définie à l'une des revendications 1 à 9, **caractérisé par le fait qu'**il comporte les étapes suivantes :
a. on mélange les constituants (A1) et (A2), lesdits constituants étant broyés séparément puis mélangés ou étant co-broyés ;
b. on calcine ledit mélange pour obtenir le mélange calciné (A) ;
c. on prépare une solution aqueuse (B), dite solution d'activation, par dissolution de pastilles d'hydroxyde d'au moins un métal alcalin dans une solution aqueuse de silicate d'au moins un métal alcalin, pour obtenir un rapport molaire silicium/métal alcalin ou métaux alcalins de 0,4 à 1,7, bornes incluses, et préférentiellement de 0,5 à 0,9, bornes incluses ;
d. on mélange le mélange calciné (A) issu de l'étape (b) et la solution d'activation (B) issue de l'étape (c) pour obtenir une solution colloïdale réactive ;
e. on met en forme la solution colloïdale réactive issue de l'étape (d) ;
f. on laisse durcir la solution colloïdale réactive mise en forme à l'étape (e) pour obtenir le géopolymère ; et
g. le cas échéant, on fait subir au géopolymère un traitement thermique à une température comprise entre 800 et 1 200°C, dans une atmosphère sèche ou humide pour l'obtention d'un géopolymère céramisé.

11. Procédé selon la revendication 10, **caractérisé par le fait qu'**à l'étape (a), le mélange (A1) + (A2) est homogénéisé pendant 4 à 12 heures.

12. Procédé selon l'une des revendications 10 et 11, **caractérisé par le fait qu'**à l'étape (b), le mélange est calciné à une température comprise entre 550 et 800°C, notamment de 600 à 750°C, soit dans un four cellule pendant une durée de 3 à 5 heures, soit dans un four rotatif pendant une durée de 0,5 à 1 heure, soit dans un four flash pendant une durée de 1 à 15 secondes.

13. Procédé selon l'une des revendications 10 à 12, **caractérisé par le fait qu'**à l'étape (e), on met en forme la solution colloïdale réactive par moulage, par coulage, par injection ou par extrusion pour la réalisation de pièces massives, ou par projection pour la réalisation de placages, ladite solution colloïdale réactive durcissant en l'espace de 1 à 360 minutes après sa mise en forme et formant le géopolymère sous la forme de :
• pièces massives de géométries variables, telles que blocs ou pièces pouvant s'assembler, coulis injectés *in situ* dans des ouvrages ;
• couches en revêtement d'une surface d'un autre matériau tel que des bétons, des briques ; ou
• par mélange avec un autre matériau, auquel cas il joue le rôle d'un liant en faisant suivre par son durcissement en mélange avec cet autre matériau.

14. Procédé selon l'une des revendications 10 à 13, **caractérisé par le fait qu'**après l'étape (e), on maintient la solution colloïdale réactive dans cet état pendant 0,5 à 2 jours avant de la laisser subir son durcissement, par ajout d'additifs minéraux « retardateurs de prise » choisis parmi ceux à base de bore ou de phosphore, tels que l'acide borique, le borax ou l'acide phosphorique, à raison notamment de 2 à 3 % en masse par rapport à la solution colloïdale.

15. Procédé selon l'une des revendications 10 à 14 pour l'obtention d'un géopolymère céramisé, **caractérisé par le fait qu'**on met en oeuvre l'étape (g) consistant à porter le géopolymère obtenu à l'étape (f), à une température comprise entre 800 et 1 200°C en atmosphère sèche ou humide pendant une durée de 15 à 120 minutes.

16. Utilisation d'un géopolymère obtenu par le procédé tel que défini à l'une des revendications 10 à 14 :
• comme liant minéral, ledit géopolymère se présentant sous la forme d'un matériau consolidé ;
• pour l'inertage de déchets industriels, ledit géopolymère ayant été amené à durcir en mélange avec lesdits déchets industriels ;
• pour former une barrière de protection thermique, ledit géopolymère ayant été obtenu par projection pour former une couche sur une surface à protéger ;
• comme élément réfractaire, ledit géopolymère ayant été obtenu par moulage ou projection

17. Utilisation d'un géopolymère céramisé obtenu par le procédé tel que défini à l'une des revendications 10 et 15 :
• pour former une barrière de protection thermique ;
• comme élément réfractaire.

## Patentansprüche

1. Zusammensetzung zur Herstellung eines Geopolymers, **dadurch gekennzeichnet, dass** sie aufweist:
(A) ein Aluminosilikat-Pulvergemisch, das gebildet ist aus:
(A1) 10 bis 75 Gewichtsanteilen mindestens eines Tonmaterials, das in Massenzusammensetzung (in Ma%) aufweist:
- 30 bis 70 % SiO₂;
- 10 bis 40 % Al₂O₃;
- 5 bis 20 % CaO;
- 0,5 bis 6 % MgO, und
(A2) 90 bis 25 Gewichtsanteilen mindestens eines Kaolins,
wobei (A1) + (A2) 100 Gewichtsanteile darstellen, und wobei die Bestandteile (A1) und (A2) gemischt und dann kalziniert wurden, um das Aluminosilikat-Pulvergemisch (A) zu bilden; und
(B) eine alkalische wässrige Lösung mindestens eines alkalischen Metallsilikats;
wobei die Bestandteile (A) und (B) bestimmt sind, gemischt zu werden, um eine reaktive kolloidale Lösung zu bilden, die imstande ist, das Geopolymer durch Härten bereitzustellen.

2. Zusammensetzung nach Anspruch 1, **dadurch gekennzeichnet, dass** das oder die Tonmaterialien des Bestandteils (A1) aus denjenigen ausgewählt sind, die in Massenzusammensetzung (in Ma%) aufweisen:
- 55 bis 65 % SiO₂;
- 15 bis 29 % Al₂O₃;
- 7 bis 13 % CaO;
- 1 bis 3 % MgO.

3. Zusammensetzung nach Anspruch 1, **dadurch gekennzeichnet, dass** das oder die Tonmaterialien des Bestandteils (A1) aus den Argiliten des Callovo-Oxfordiums hervorgegangen sind, das die folgende mineralogische Zusammensetzung hat:
| | | Ma% |
|---|---|---|
| Tonmaterialien | | 20-55 |
| (darunter Kaolin) | | (3-5) |
| Carbonate | Calcite (CaO₃) Dolomit (CaMg(CO₃)₂) ; und Ankerit Ca (Fe, Mg)(CO₃)₂ | 20-40 |
| | | 1,5-6,5 |
| Silikate und Tectosilikate | Quarz (SiO₂) | 15-28 |
| | Kalium-Feldspath | 1-2 |
| | Plagioclase | 0,5-1,5 |
| Beimaterialien | (darunter Pyrite) | 1,5-3,0 |
oder die folgende Massenzusammensetzung, in Ma%:
- SiO₂: 50-60;
- Al₂O₃: 10-20;
- Na₂O: 0-1;
- K₂O: 3-4;
- CaO: 5-20;
- MgO: 2-6;
- Fe₂O₃: 4-6;
- S: 1-3, und
mit einem Molverhältnis Si/Al, das zwischen 2,5 und 3,5 liegt.

4. Zusammensetzung nach einem der Ansprüche 1 bis 3, **dadurch gekennzeichnet, dass** der Bestandteil (A2) ein Kaolin ist, entweder gereinigt (nachfolgend bezeichnet als Kₚᵤᵣ), oder Beimineralien wie Quarz und erdalkalische Carbonate enthaltend (nachfolgend bezeichnet als K_{carb}), das aus denjenigen ausgewählt ist, die die folgenden Massen-Zusammensetzungen haben:
| Bezeichnung | SiO₂ (Ma%) | Al₂O₃ (Ma%) | Molverhältnis Si/Al |
|---|---|---|---|
| Kₚᵤᵣ | 54±5 | 46+5 | 1 |
| K_{carb} | 60±3 | 35±3 | 1,44 |
oder die folgende mineralogische Zusammensetzung, in Ma%:
| Bezeichnung | Kₚᵤᵣ | K_{carb} |
|---|---|---|
| Kaolin | 98 | 54,9 |
| Quarz | 0 | 41,7 |
| Carbonate | 0 | 1,2 |
| Hämatit | 0 | 0,7 |
| Beimaterialien | 2 | 1,5 |

5. Zusammensetzung nach einem der Ansprüche 1 bis 4, **dadurch gekennzeichnet, dass** der Bestandteil (A1) 50 bis 70 Gewichtsanteile des Gemischs (A) darstellt und der Bestandteil (A2) 50 bis 30 Gewichtsanteile.

6. Zusammensetzung nach einem der Ansprüche 1 bis 5, **dadurch gekennzeichnet, dass** das Gemisch (A) bei einer Temperatur kalziniert wurde, die zwischen 550 und 800 °C, Grenzwerte inklusive, und vorzugsweise zwischen 600 und 750 °C, Grenzwerte inklusive, liegt.

7. Zusammensetzung nach einem der Ansprüche 1 bis 6, **dadurch gekennzeichnet, dass** das oder die Silikate der Alkalimetalle aus einem Kalisilikat und einem Natriumsilikat ausgewählt sind.

8. Zusammensetzung nach einem der Ansprüche 1 bis 7, **dadurch gekennzeichnet, dass** das Molverhältnis Silizium/Alkalimetall oder Alkalimetalle des oder der Silikate des Bestandteils (B) zwischen 0,4 und 1,7, Grenzwerte inklusive, und vorzugsweise zwischen 0,5 und 0,9, Grenzwerte inklusive, liegt.

9. Zusammensetzung nach einem der Ansprüche 1 bis 8, **dadurch gekennzeichnet, dass** die wässrige Lösung, die den Bestandteil (B) bildet, einen Wassergehalt von 80 bis 40 Gew.-%, insbesondere von 70 bis 50 Gew.-% hat.

10. Verfahren zur Herstellung eines Geopolymers aus einer Zusammensetzung nach einem der Ansprüche 1 bis 9, **dadurch gekennzeichnet, dass** es die folgenden Schritte aufweist:
(a) Mischen der Bestandteile (A1) und (A2), wobei die Bestandteile separat zerkleinert und dann gemischt oder gemeinsam zerkleinert werden;
(b) Kalzinieren des Gemischs, um das kalzinierte Gemisch (A) zu erhalten;
(c) Herstellen einer wässrigen Lösung (B), bezeichnet als Aktivierungslösung, durch Auflösen von Hydroxydpellets mindestens eines Alkalimetalls in einer wässrigen Silikatlösung mindestens eines Alkalimetalls, um ein Molverhältnis Silizium/Alkalimetall oder Alkalimetalle von 0,4 bis 1,7, Grenzwerte inklusive, und vorzugsweise von 0,5 bis 0,9, Grenzwerte inklusive, zu erhalten;
(d) Mischen des kalzinierten Gemischs (A) aus Schritt (b) und der Aktivierungslösung (B) aus Schritt (c), um eine reaktive kolloidale Lösung zu erhalten;
(e) Formen der reaktiven kolloidalen Lösung aus Schritt (d) ;
(f) Härtenlassen der reaktiven kolloidale Lösung, die in Schritt (e) geformt wurde, um das Geopolymer zu erhalten; und
(g) gegebenenfalls thermisches Behandeln des Geopolymers bei einer Temperatur, die zwischen 800 und 1.200 °C liegt, in einer trockenen oder feuchten Atmosphäre, um ein keramisiertes Geopolymer zu erhalten.

11. Verfahren nach Anspruch 10, **dadurch gekennzeichnet, dass** in Schritt (a) das Gemisch (A1) + (A2) 4 bis 12 Stunden lang homogenisiert wird.

12. Verfahren nach einem der Ansprüche 10 und 11, **dadurch gekennzeichnet, dass** in Schritt (b) das Gemisch bei einer Temperatur kalziniert wird, die zwischen 550 und 800 °C, insbesondere von 600 bis 750 °C liegt, entweder in einem Zellenofen während einer Dauer von 3 bis 5 Stunden oder in einem Rotationsofen wahrend einer Dauer von 0,5 bis 1 Stunde oder in einem Flashofen während einer Dauer von 1 bis 15 Sekunden.

13. Verfahren nach einem der Ansprüche 10 bis 12, **dadurch gekennzeichnet, dass** in Schritt (e) die reaktive kolloidale Lösung durch Formen, durch Gießen, durch Spritzen oder durch Extrusion für die Herstellung von massiven Teilen oder durch Projektion für die Herstellung von Furnieren geformt wird, wobei die reaktive kolloidale Lösung im Zeitraum von 1 bis 360 Minuten nach ihrem Formen härtet und das Geopolymer in Form bildet von:
- massiven Teilen unterschiedlicher Geometrien wie Blöcke oder Teile, die verbindbar sind, Aufschlämmungen, die *in situ* in Bauwerke gespritzt werden;
- Schichten als Beschichtung einer Oberfläche aus einem anderen Material wie Beton, Ziegel; oder
- Gemischen mit einem anderen Material, wobei es dann durch Übernahme seiner Aushärtung im Gemisch mit diesem anderen Material die Rolle eines Bindemittels spielt.

14. Verfahren nach einem der Ansprüche 10 bis 13, **dadurch gekennzeichnet, dass** nach Schritt (e) die reaktive kolloidale Lösung, bevor man sie härten lässt, durch Hinzufügen von "aushärtungsverzögernden" mineralischen Zusätzen, die aus denen auf Bor- oder Phosphorbasis ausgewählt sind wie Borsäure, Borax oder Phosphorsäure in einer Menge von insbesondere 2 bis 3 Ma% im Verhältnis zu der kolloidalen Lösung 0,5 bis 2 Tage lang in diesem Zustand gehalten wird.

15. Verfahren nach einem der Ansprüche 10 bis 14 für den Erhalt eines keramisierten Geopolymers, **dadurch gekennzeichnet, dass** der Schritt (g), der darin besteht, das in Schritt (f) erhaltene Geopolymer auf eine Temperatur zwischen 800 und 1.200 °C in trockener oder feuchter Atmosphäre zu bringen, 15 bis 120 Minuten lang durchgeführt wird.

16. Verwendung eines Geopolymers, das durch das Verfahren nach einem der Ansprüche 10 bis 14 erhalten wurde:
- als mineralisches Bindemittel, wobei das Geopolymer in Form eines konsolidierten Materials vorliegt;
- zum Inertisieren von Industrieabfällen, wobei das Geopolymer im Gemisch mit den Industrieabfällen gehärtet wird;
- zum Bilden einer Wärmeschutzbarriere, wobei das Geopolymer durch Projektion gewonnen wurde, um eine Schicht auf einer zu schützenden Oberfläche zu bilden;
- als refraktäres Element, wobei das Geopolymer durch Formen oder durch Projektion gewonnen wurde.

17. Verwendung eines keramisierten Geopolymers, das durch das Verfahren nach einem der Ansprüche 10 und 15 gewonnen wurde:
- um eine Wärmeschutzbarriere zu bilden;
- als refraktäres Element.

## Claims

1. A composition for the formation of a geopolymer **characterized by** the fact that it comprises :
(A) a powdered alumino-silicated mixture of :
(A1) 10 to 75 parts by weight of at least one clay material having, in mass composition (in mass%) :
- 30 to 70% SiO₂ ;
- 10 to 40% Al₂O₃ ;
- 5 to 20% CaO ;
- 0.5 to 6% MgO, and
(A2) 90 to 25 parts by weight of at least one kaolin,
(A1) + (A2) representing 100 parts by weight,
and the components (A1) and (A2) having been mixed and then calcined to form said powdered alumino-silicated mixture (A); and
(B) an aqueous alkaline solution of at least one alkali metal silicate;
the components (A) and (B) being intended to be mixed to form a reactive colloidal solution capable of providing said geopolymer upon curing.

2. The composition according to claim 1, **characterized by** the fact that the clay material(s) of the constituent (A1) are chosen from those having in mass composition (in mass %) :
- 55 to 65% SiO₂ ;
- 15 to 29% Al₂O₃ ;
- 7 to 13% CaO ;
- 1 to 3% MgO.

3. The composition according to claim 1, **characterized by** the fact that the clay material(s) of component (A1) are derived from Callovo-Oxfordian argillites having the following mineralogical composition:
| | | Mass % |
|---|---|---|
| Clay minerals (including kaolin) | | 20-55 |
| | | (3-5) |
| Carbonates | Calcite (CaCO₃) Dolomite (CaMg(CO₃)₂) ; and Ankerite Ca(Fe, Mg)(CO₃)₂ | 20-40 |
| | | 1.5-6.5 |
| Silicates and Tectosilicates | Quartz (SiO₂) | 15-28 |
| | Potassium feldspar | 1-2 |
| | Plagioclase | 0.5-1.5 |
| Supplementary minerals | (including pyrites) | 1.5-3.0 |
or the following composition by weight, in mass%:
- SiO₂: 50-60 ;
- Al₂O₃: 10-20 ;
- Na₂O: 0-1 ;
- K₂O: 3-4 ;
- CaO: 5-20 ;
- MgO: 2-6 ;
- Fe₂O₃: 4-6 ;
- S: 1-3, and
having a Si/Al molar ratio between 2.5 and 3.5.

4. The composition according to one of claims 1 to 3, **characterized by** the fact that the component (A2) is a kaolin either purified (hereinafter referred to as Kₚᵤᵣ), or containing accessory minerals such as quartz and alkaline earth carbonates (hereinafter referred to as K_{carb}), selected from those having the following mass compositions :
| Designation | SiO₂ (mass %) | Al₂O₃ (mass %) | Si/Al Molar ratio |
|---|---|---|---|
| Kₚᵤᵣ | 54±5 | 46±5 | 1 |
| K_{carb} | 60±3 | 35±3 | 1.44 |
or the following mineralogical composition, in mass%:
| Designation | Kₚᵤᵣ | K_{carb} |
|---|---|---|
| Kaolin | 98 | 54.9 |
| Quartz | 0 | 41.7 |
| Carbonates | 0 | 1.2 |
| Hematite | 0 | 0.7 |
| Supplementary Minerals | 2 | 1.5 |

5. The composition according to one of claims 1 to 4, **characterized by** the fact that the component (A1) represents 50 to 70 parts by weight of the mixture (A), and the component (A2), 50 to 30 parts by weight.

6. The composition according to one of claims 1 to 5, **characterized by** the fact that the mixture (A) has been calcined at a temperature of between 550 and 800°C, inclusive, and preferably between 600 and 750°C, inclusive.

7. The composition according to one of claims 1 to 6, **characterized by** the fact that the alkali metal silicate(s) are selected from a potassium silicate and a sodium silicate.

8. The composition according to one of claims 1 to 7, **characterized in that** the silicon/alkali metal(s) molar ratio of the silicate(s) of component (B) is between 0.4 and 1.7, inclusive, and preferably between 0.5 and 0.9, inclusive.

9. The composition according to one of claims 1 to 8, **characterized in that** the aqueous solution forming component (B) has a water content of 80 to 40% by weight, in particular 70 to 50% by weight.

10. A process for the manufacture of a geopolymer from a composition as defined in one of claims 1 to 9, **characterized by** the fact that it comprises the following steps:
(a) the components (A1) and (A2) are mixed, said components being ground separately and then mixed or being co-ground;
(b) said mixture is calcined to obtain the calcined mixture (A);
(c) an aqueous solution (B), said activating solution, is prepared by dissolving pellets of hydroxide of at least one alkali metal in an aqueous silicate solution of at least one alkali metal, in order to obtain a silicon/alkali metal(s) molar ratio of 0.4 to 1.7, inclusive, and preferably of 0.5 to 0.9, inclusive;
(d) the calcined mixture (A) from step (b) and the activation solution (B) from step (c) are mixed to obtain a reactive colloidal solution;
(e) the reactive colloidal solution from step (d) is formed;
(f) the reactive colloidal solution formed in step (e) is allowed to cure to obtain the geopolymer; and
(g) if necessary, the geopolymer is subjected to a heat treatment at a temperature between 800 and 1200°C, in a dry or humid atmosphere, in order to obtain a ceramized geopolymer.

11. The process according to claim 10, **characterized in that** in step (a) the mixture (A1) + (A2) is homogenized for 4 to 12 hours.

12. The process according to one of claims 10 and 11, **characterized in that** in step (b) the mixture is calcined at a temperature of between 550 and 800°C, in particular 600 to 750°C, either in a cell furnace for a period of 3 to 5 hours, or in a rotary furnace for a period of 0.5 to 1 hour, or in a flash furnace for a period of 1 to 15 seconds.

13. The process according to one of claims 10 to 12, **characterized in that** in step (e) the reactive colloidal solution is shaped by molding, casting, injection or extrusion for the production of solid parts, or by spraying for the production of platings, the said reactive colloidal solution curing within 1 to 360 minutes after its forming and forming the geopolymer in the form of :
- massive parts of variable geometry, such as blocks or parts that can be assembled, grouts injected *in situ* in structures;
- coatings on a surface of another material such as concrete, bricks; or
- by mixing with another material, in which case it acts as a binder and is followed by its curing in mixture with this other material.

14. The process according to one of claims 10 to 13, **characterized by** the fact that after step (e), the reactive colloidal solution is maintained in this state for 0.5 to 2 days before being allowed to cure, by adding mineral "set retarding" additives chosen from those based on boron or phosphorus, such as boric acid, borax or phosphoric acid, in a ratio of 2 to 3% by weight relative to the colloidal solution.

15. The process according to one of claims 10 to 14 for obtaining a ceramized geopolymer, **characterized in that** step (g) consisting in heating the geopolymer obtained in step (f) to a temperature of between 800 and 1200°C in a dry or humid atmosphere for a period of 15 to 120 minutes is carried out.

16. A use of a geopolymer obtained by the process as defined in one of claims 10 to 14:
- as a mineral binder, said geopolymer being in the form of a consolidated material;
- for inerting industrial waste, said geopolymer having been caused to cure in admixture with said industrial waste;
- to form a thermal protection barrier, said geopolymer having been sprayed to form a layer on a surface to be protected;
- as a refractory element, said geopolymer having been obtained by molding or spraying.

17. The use of a ceramized geopolymer obtained by the process as defined in one of claims 10 and 15:
- to form a thermal protection barrier;
- as a refractory element.
